# EUROPEAN PATENT SPECIFICATION

(11) **EP 2 801 506 B1**
(45) Date of publication and mention of the grant of the patent: **06.04.2016**
(21) Application number: 14166173.6
(22) Date of filing: 28.04.2014
(51) Int. Cl.: B62D 1/184, B62D 1/187, F16B 7/10

(54) **Multifunctional tiltable steering column**
Mehrfunktions neigbare Lenksäule
Colonne de direction inclinable multifonctionnelle

(30) Priority: 07.05.2013 IT MI20130735
(43) Date of publication of application: 12.11.2014
(73) Proprietor: FINAN.CO. S.r.l, 20056 Trezzo Sull'Adda - Milano (IT)
(72) Inventor: Barbieri, Walter, 20056 TREZZO SULL'ADDA-MILANO (IT)
(74) Representative: Giuli, Maurizio Mario Galdino

(56) References cited:
- EP-A1- 0 127 026
- EP-A1- 0 156 114
- DE-A1-102011 001 765
- US-A- 4 193 707
- US-B1- 6 213 675

## Description

The present invention relates to a multifunctional tiltable steering column.

In the automotive field, various types of steering columns are currently used, consisting of a plurality of elements, some of which obtained through complex formation and assembly operations.

These columns envisage particularly complex connections for effecting the necessary movements and regulations, for example with respect to the height.

Furthermore, in a conventional steering column, a telescopic group is envisaged, consisting of a series of male and female grooved elements, which are almost all obtained from the processing of bars subsequently subjected to more or less lengthy, complex and expensive thermal treatment.

Cardan joints are used in these columns to allow angular regulation movements of the steering wheel, having a certain amplitude (greater or lesser) in the various directions ergonomically selected, or in the disengagement direction from the position on the vehicle. This in fact allows the transmission of the rotational movement between two shafts with a certain incidence angle.

In a steering column equipped with regulation of the tilt, so-called "tiltable", the transmission of the movement of the steering wheel-power steering system is exerted by a conventional cardan joint.

It is known that with the presence of a cardan joint, the maximum potential angle does not exceed 45°. Consequently, in some steering columns, a series of cardan joints are sometimes inserted, in order to allow wider tilt angles (tiltable). This provision implies a cost increase, complex construction, and does not solve further problems strictly connected to the use of a cardan joint.

Even if these known provisions-solutions are subjected to specific surface protection treatment, they have a low water resistance and solutions for improving this characteristic have not as yet been found.

In any case, the interaction of the characteristics mentioned above do not allow high and complex performances of traditional steering columns.

EP 127 026 A1 refers to a tiltable steering column comprising tubular elements which are associated in telescoping manner.

Many attempts have been made in recent years to find a solution to the various problems described above, but no valid solution has as yet been found.

The general objective of the present invention is to solve the above-mentioned drawbacks of the known art, in an extremely simple, economic and particularly functional manner.

A further objective of the present invention is to provide a multifunctional tiltable steering column which has a particularly simplified construction that does not require additional mechanical processings for adapting the parts.

Another objective of the present invention is to provide a multifunctional tiltable steering column which is water-resistant in its connected and connecting parts.

Yet another objective of the present invention is to provide a multifunctional tiltable steering column which is capable of withstanding and absorbing vibrations without important interventions in the articulated joint and with extremely limited or rather unvaried encumbrances.

In view of the above objectives, according to the present invention, a multifunctional tiltable steering column has been conceived, having the characteristics specified in the enclosed claims.

The structural and functional characteristics of the present invention and its advantages with respect to the known art will appear even more evident from the following description, referring to the enclosed drawings, which, inter alia, show a scheme of an embodiment of a multifunctional tiltable steering column produced according the invention. In the drawings:

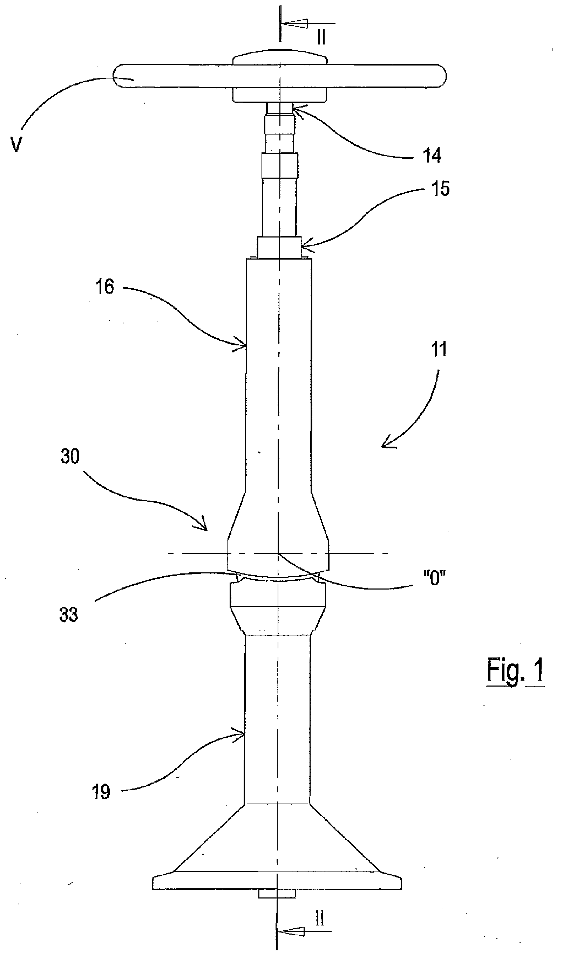

- figure 1 shows a raised view of a tiltable steering column produced according to the invention;

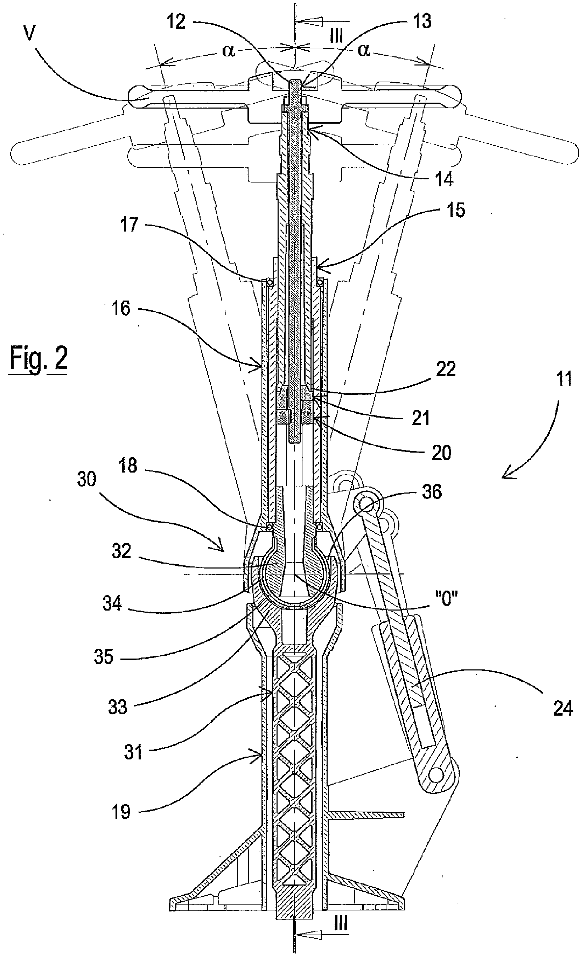

- figure 2 shows a view in a section tilted by 90° of the steering column shown in figure 1;

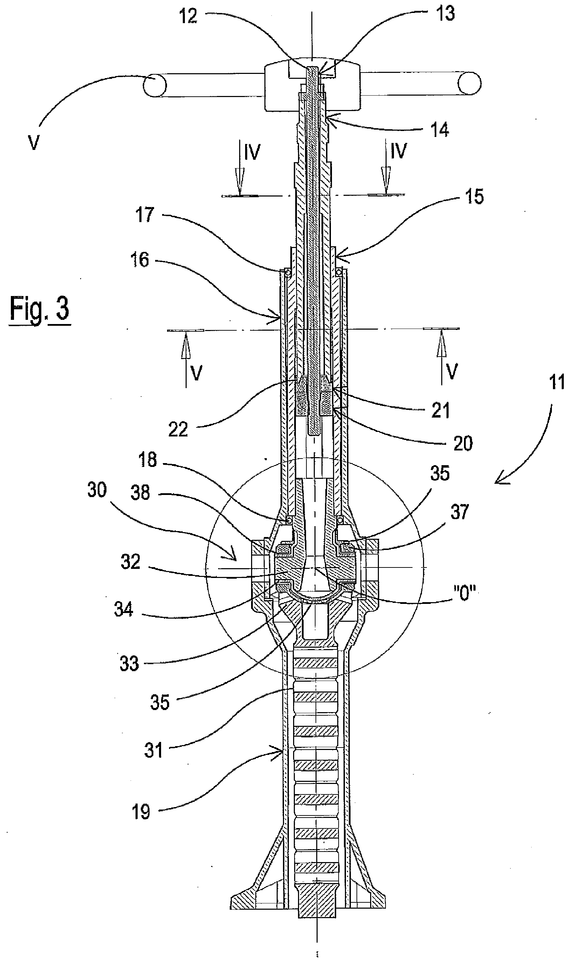

- figure 3 shows a sectional view of the steering column shown in figure 1;

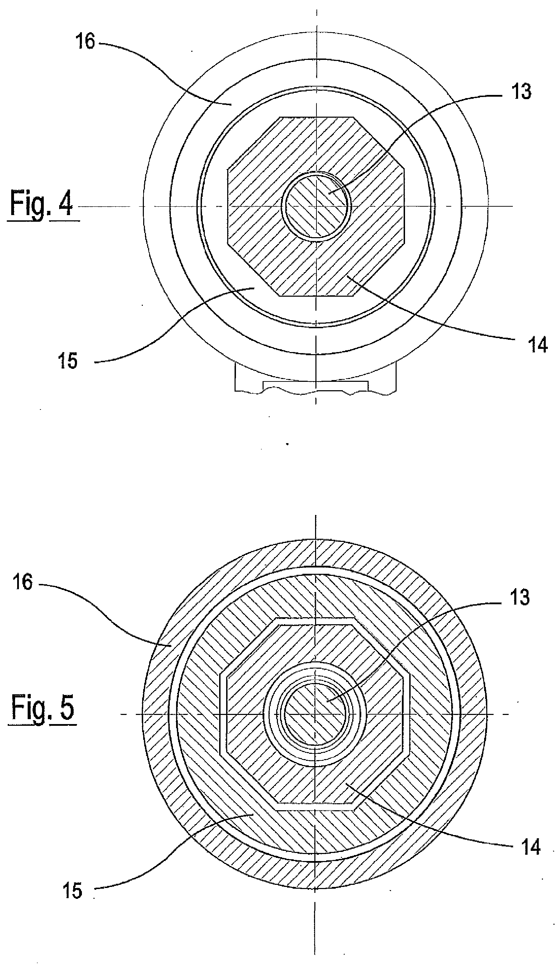

- figures 4 and 5 are sections according to the lines IV-IV and V-V of figure 3;

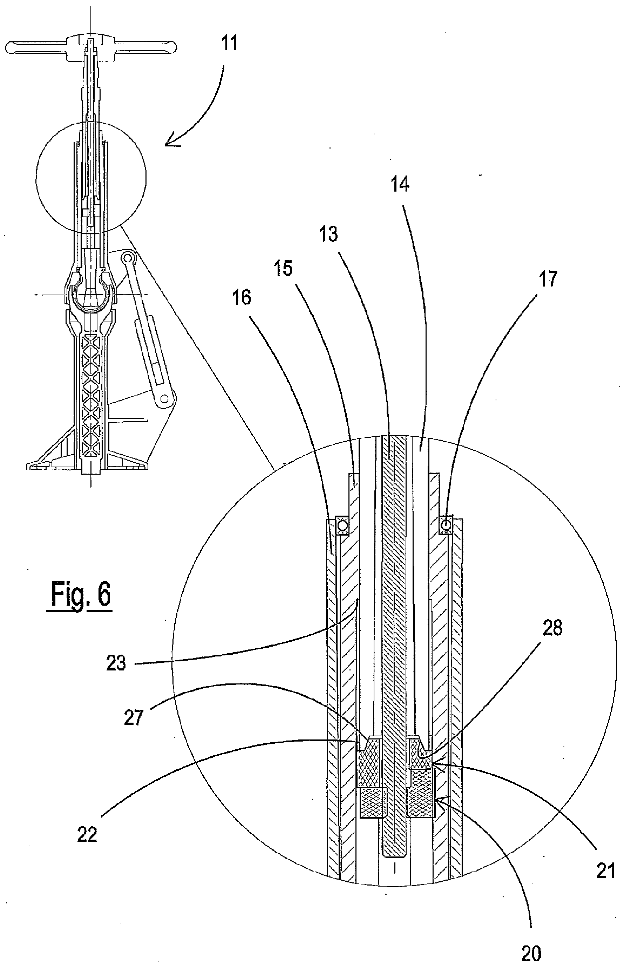

- figure 6 shows an enlarged detail of figure 2;

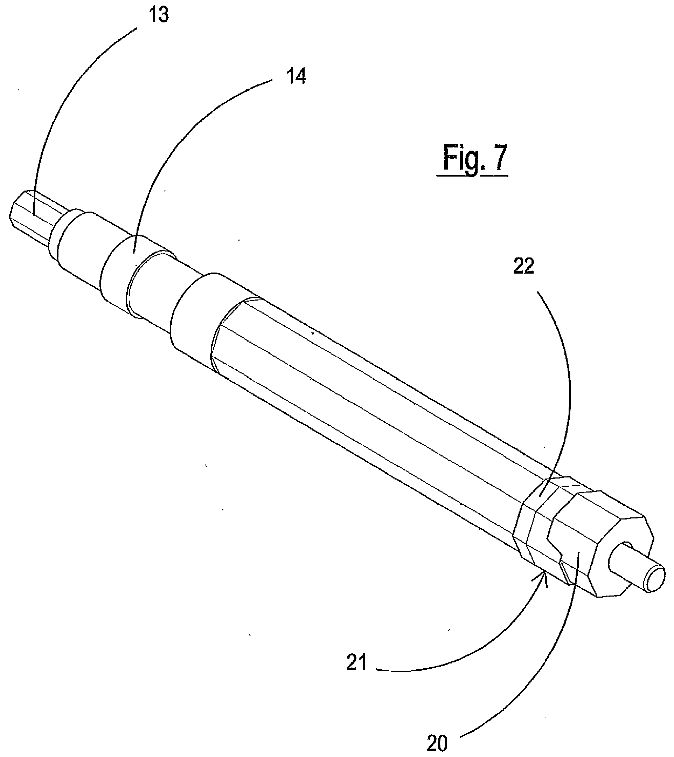

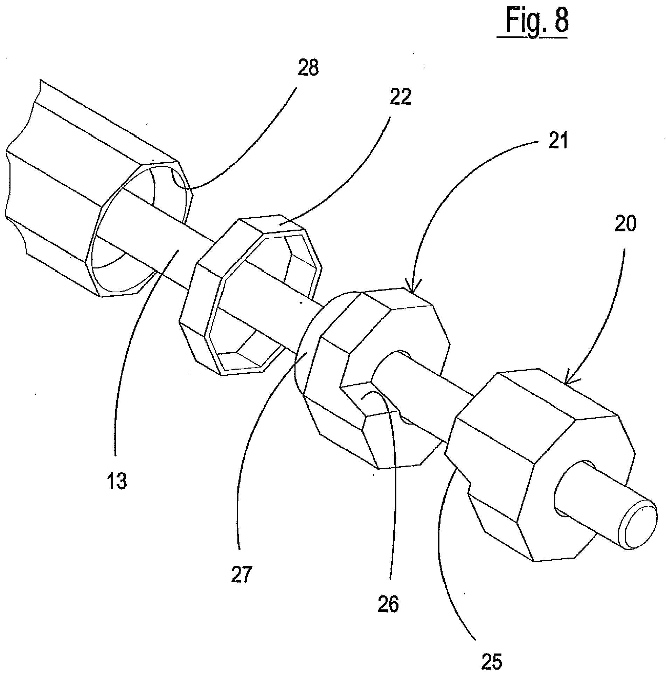

- figures 7 and 8 are assembled and partially assembled perspective and exploded views of some details;
- figure 9 shows an enlarged view of a central portion of the section of figure 2;
- figure 10 is a section according to the lines X-X of figure 9; and
- figure 11 is a perspective view with exploded parts of the transmission coupling shown in figures 9 and 10.

With reference to the set of figures, these illustrate a multifunctional tiltable steering column according to angles α, produced according to the present invention, indicated as a whole with the reference number 11.

A free upper end 12 of a rod element 13 is made integral with a handle (not shown in the drawings), positioned centrally in a steering wheel V of a vehicle, not shown.

The steering wheel is fixed to a tubular element 14 which in turn is positioned coaxially externally to contain the internal rod element 13.

The tubular element 14, in turn, slides inside an outer tubular element 15, forming a telescopic group, according to a coupling with a polygonal section which is shown in the figures as prismatic with an octagonal section, but which can have a similar polygonal form. In this way, the coupling is suitable for allowing the transmission of the rotational movement from the inner tubular element 14 to the outer tubular element 15, in any case allowing an axial sliding of the tubular element 14 with respect to the outer tubular element 15.

The tubular elements 14, 15 and 16 are produced by die casting with a light aluminium alloy without drastically reducing the mechanical processings of the present steering columns.

This outer tubular element 15 is supported at its ends by a containment element 16, which surrounds it and forms a first movable part of the chassis, by means of a pair of bearings 17 and 18. In this way, the outer tubular element 15 is free to rotate but is axially blocked with respect each axial movement.

The containment element 16, or first movable part of the chassis, is aligned and hinged in "0" with respect to a second containment element 19 or second underlying fixed and tiltable part of the chassis thanks to the presence of a gas spring group 24 which can be regulated in the desired position by means of a specific command in order to maintain the position selected.

By applying an extremely light torque to the handle mentioned above (not shown), the rod 13 rotates and is screwed inside a first blocking element 20 which acts as a lower clamp. The first blocking element 20 has a profile of the outer perimeter complementary to the inner section of the outer polygonal tubular element 15, in this case octagonal, inside which it can be moved. A second blocking element 21, which acts as an upper clamp, has an outer perimeter which is also complementary to the inner section of the above-mentioned outer polygonal tubular element 15 inside which it can also be moved.

The second blocking element 21 can freely slide on the rod 13, so as to be brought into contact with the first blocking element 20 and with the inner sliding tubular element 14, and acts as a lower clamp. The blocking elements 20, 21 on facing surfaces comprise: the first element 20, a beveled portion 25, and the other element 21, a beveled portion 26 having a complementary form.

These portions 25 and 26 act as expansion planes of the two blocking elements 20, 21. The beveled portions 25 and 26, in fact, when coupled, slide over each other so as to cause a transversal sliding between each other, and are blocked with respect to the inner wall of the tubular element 15. More specifically, some figures show an exaggerated situation and conformation which, in reality, is in the order of a few tenths, in order to clarify the structure, arrangement and functioning of the parts.

In order to produce this forced arrangement of the blocking elements 20, 21, the rod 13 undergoes a slight curvature with respect to its axis and moves inside the blocking element 21 which, as already mentioned, slides on the same rod 13. In this way, the rod 13 is elastically deformed transversally, oscillating and following the transversal movement of the first blocking element 20. With this movement, the blocking elements 20 and 21 produce a front coupling with the outer tubular element 14. When the rod 13 rotates in a direction, in fact, the first blocking element 20 is compelled to re-ascend inside the tubular element 15, entraining with it the second blocking element 21, creating forced expandable coupling means between the inner tubular element 14 and the outer tubular element 15.

Due to the rotation of the rod 13, the first blocking element 20 and the second blocking element 21 expand transversally.

This is because they are reciprocally in contact according to suitable tilted facing side walls, or oblique fronts. This leads to a forcing of the two blocking elements 20, 21 on the inner walls of the outer tubular element 15.

In this way, the blocking between the parts is immediate and secure. Consequently, not only is the maintaining of the axial regulation effected guaranteed, but also the blocking between the parts is highly stabilizing with respect to the transversal clearances that may exist between the tubular element 14 and the outer tubular element 15. In this way, these clearances are cancelled and the tubular element 14 and outer tubular element 15 become integral with each other (as if welded).

This stable position is obtained also thanks to the presence of a centering between the two blocking elements 20, 21, the rod 13 and the tubular elements 14, 15. This centering is obtained by a conical annular axial extension 27 envisaged on the second blocking element 21 in the part opposite to that in which there is the beveled portion 26. This conical annular axial extension 27 is in fact engaged inside a complementary housing 28 positioned axially and internally with respect to the facing end of the overlying tubular element 14.

An amortizing or damping run-end element 22 is also envisaged, also polygonally shaped, which is free to slide axially with respect to the tubular element 14 and is axially contained between the second blocking element 21 (upper clamp) and the outer tubular element 15. The tubular element 14 reaches the maximum axial extraction when the height of the interchamber between the second blocking element 21 (upper clamp) and the tubular outer element 15 is reduced becoming equal to the height of the damping element 22. The damping element 22 (which has adequate damping characteristics) becomes the run-end stop when the steering wheel is extracted, which is "smooth" also in the presence of sudden and rapid run-end axial movements of the telescopic group + steering wheel, thanks to the presence of an annular undercut 23 inside the tubular element 15.

In order to exert its function, the steering column of the invention must also have a coupling 30 between the first movable part of the chassis 16 and the second underlying fixed part of the chassis 19.

In an embodiment, this coupling is fixed to the outer tubular element 15 and is a transmission coupling with a complete shaft for transmitting the rotational movement to a power steering pump (not shown) and allowing an articulation around a hinge in "O" for regulating the tilt.

In a further motorized version of the column (not shown) an electric actuator can be envisaged, which assists/produces/stabilizes the movement of the tilting function.

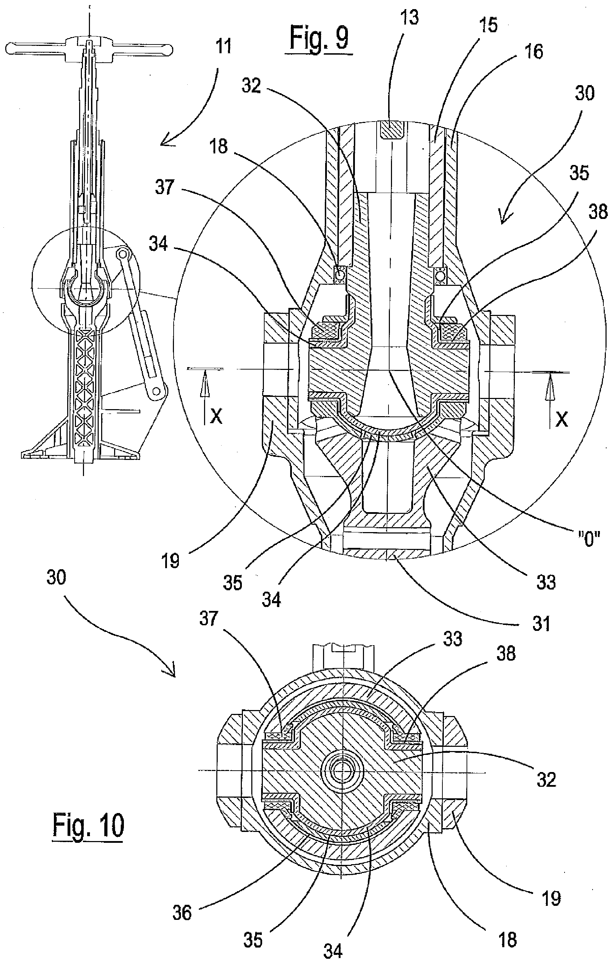

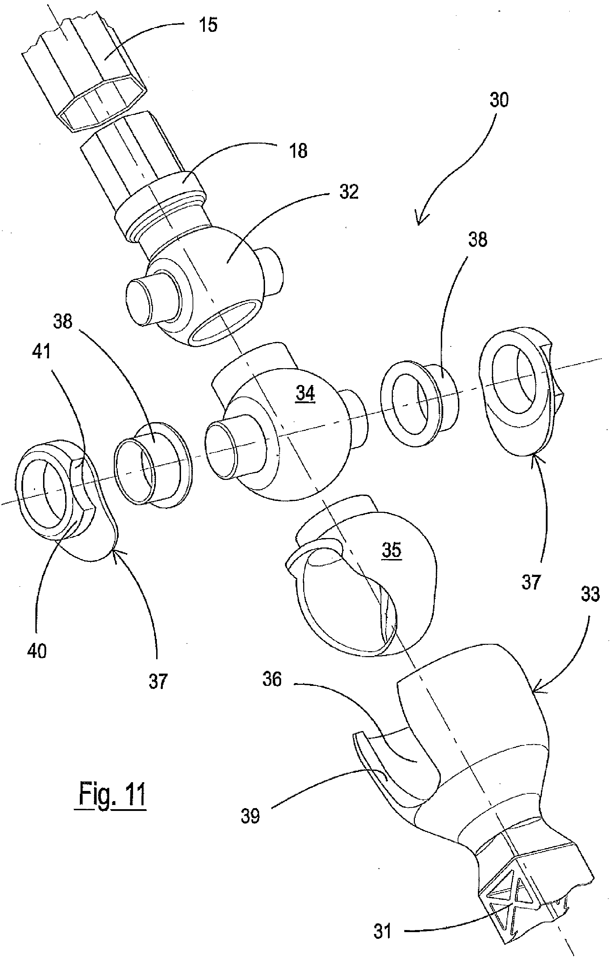

As can also be seen in figures 9, 10 and 11, this is a coupling, indicated as a whole with 30, for transmitting the rotational movement between two shafts, indicated in this case with 15 and 31 in the figures, having a certain incidence angle. In this case it is used for transmitting the rotational movement from the steering wheel connected to the shaft 13 (driven shaft) to a power steering system (not shown), in a steering column equipped with a tiltable movement.

The transmission coupling 30 comprises a first upper half-coupling 32 coupled with the end of the shaft 15 and a second lower half-coupling 33, shown in the figure as being integral with the shaft 31, which form a complete spherical bulb-shaped coupling. The first upper half-coupling 32 is sheathed (completely isolated) with respect to the other components, by means of a sheath element 34 which envelops it in one of its coupling portions to the second lower half-coupling 33.

The sheath element 34 is a rubber damping element (suitably dimensioned in thickness, in the shore hardness, in the exchange areas of the tangential forces generated by the rotation torque). The sheath element 34 is in turn covered by an antifriction jacket 35 whose exterior is coupled in a sliding spherical coupling with a cavity 36 of the second lower half-coupling 33 (lower half-coupling onto which the rotational movement coming from the first upper half-coupling 32 is transferred).

Two cylindrical bushes 38 are fitted, with suitable interference, on the damping sheath element 34, on which two skids 37 are articulated.

Shaped opposite sides 40 having milled portions 41, protrude from each skid 37 and are coupled laterally in appropriate seats 39 situated in the spherical cavity 36 of the second lower half-coupling 33.

The torque transfer from the first upper half-coupling 32 to the second lower half-coupling 33, takes place through contact between milled portions 41 of the shaped sides 40 of the skids 37 and the flanks of the seats 39 of the second lower half-coupling 33.

The particular feature of the coupling described ensures that in the presence of an incidence angle between the driving axis 15 and driven axis 31, the rotation of these axes is kept stable around the relative intersection point, thanks to the spherical bulb-shaped coupling between the first upper half-coupling 32 and the second lower half-coupling 33 with the interpositioning of the sheath element 34 and antifriction jacket 35.

The equations of motion show a non-homokinetic behaviour of the coupling with respect to both the velocity and driving and driven torques, in the same way as a normal cardan joint. However, what is taking place in fact is the elimination of the cardan joint cross, with a considerable simplification of the parts.

Each contact or transfer of forces or torques from the first upper half-coupling 32 (connected to the steering column) to the second lower half-coupling 33 (connected on the power steering system, considered as being isolated with common silent blocks with respect to the column and vehicle/cabin on which this is fixed) is mediated by the damping sheath element 34.

There is therefore a functional integration, inside the same spherical bulb-shaped coupling, of a suitable damping element capable of damping the vibroacoustic signal still coming from the power steering system. This vibroacoustic signal, through rigid contact between the power steering system and the second lower half-coupling 33, is conveyed by the same which, becoming energized, transmits it reaching the above-mentioned damping sheath element 34 which transmits it to the column, damping it. There is therefore an important attenuation of the noise which would otherwise be reverberated in the cabin. This second lower half-coupling 33 is obviously supported at one end by the power steering system itself, whereas the other end is the above-mentioned coupling.

No intermediate supporting element can be added at the second lower half-coupling 33, without the danger of short-circuiting the isolation of the power steering system with respect to the steering column. The present coupling (in terms of tolerable side reaction torques) allows the absence of these intermediate supporting elements, like a cardan joint.

The spherical bulb-shaped coupling described above can, if necessary, be without the second lower damping half-coupling 33, by simply increasing the thickness of the antifriction jacket 35, thus creating a certain versatility towards less demanding applications in which sound-reduction performances are not required (e.g. flatbed cars or vehicles, etc.).

In order to improve the mechanical performance of the spherical bulb-shaped coupling, the skids 37 can be substituted by rolling elements, capable of rolling along the sides of the entrainment seats situated in the spherical cavity of the second lower half-coupling 33.

Alternatively, a CV joint, not illustrated in the present patent application, can also be used.

The objective mentioned in the preamble of the description has therefore been achieved.

The forms of the structure for producing a steering column of the invention, as also the materials and assembly modes, can obviously differ from those shown for purely illustrative and non-limiting purposes in the drawings.

The protection scope of the present invention is therefore delimited by the enclosed claims.

## Claims

1. A multifunctional tiltable steering column comprising a first movable part of the chassis (16) and a second underlying fixed part (19) of the chassis, a rod element (13), integral with a handle, positioned in the centre of a steering wheel of a vehicle being situated in said first part of the movable chassis (16), and a shaft (31) connected to a hydraulic power steering system, being positioned inside said second underlying fixed part (19) of the chassis, a coupling (30) being interposed for the transmission of the rotational movement between said rod element (13) and said shaft (31) and for the regulated tilted positioning between said first movable part (16) of the chassis and said second underlying fixed part (19) of the chassis, wherein said rod element (13) is positioned in a telescopic group comprising an internal tubular element (14) which slides internally and axially with respect to an outer tubular element (15), wherein a forced expandable coupling means (20, 21) is positioned inside said outer tubular element (15) and movable with respect to outer tubular element (15), which are moved by the rotation of said rod element (13) and suitable for positioning it firmly in a height position with respect to said first movable part of the chassis (16), **characterized in that** a polygonal coupling is envisaged between said two tubular elements (14, 15), wherein said coupling (30) comprises a first upper half-coupling (32) coupled with the end of said outer tubular element (15) and a second lower half-coupling (33) integral with the shaft (31), which form a complete spherical bulb-shaped coupling in which said first upper half-coupling (32) is sheathed by means of a sheath element (34) which envelops it in one of its coupling portions to the second lower half-coupling (33), said sheath element (34) being a rubber damping element and two cylindrical bushes (38) are fitted with interference on said sheath element (34), on which two skids (37) inserted in said second lower half-coupling (33) are articulated.

2. The steering column according to claim 1, **characterized in that** said forced expandable coupling means comprise a first blocking element (20) and a second blocking element (21), both having a shape of the outer perimeter complementary to the internal section of the outer polygonal tubular element (15).

3. The steering column according to claim 2, **characterized in that** said first blocking element (20) and said second blocking element (21) comprise, on surfaces facing each other: the first element (20), a beveled portion (25), and the other element (21), a beveled portion (26) having a complementary form, which act as expansion planes of the two blocking elements (20, 21).

4. The steering column according to claim 2 or 3, **characterized in that** said second blocking element (21) can slide freely on the rod element (13), so as to be brought in contact with said first blocking element (20) and with said internal sliding tubular element (14).

5. The steering column according to claim 3 or 4, **characterized in that** a conical annular axial extension (27) is envisaged on said second blocking element (21), in the part opposite to that in which there is said beveled portion (26), and which is engaged inside a complementary housing (28) positioned axially with respect to a facing end of said tubular element (14).

6. The steering column according to claim 1, **characterized in that** said sheath element (34) is in turn covered by an antifriction jacket (35) whose exterior is coupled in a sliding spherical coupling with a cavity (36) of the second lower half-coupling (33).

7. The steering column according to claim 1, **characterized in that** said skids (37) have shaped opposite sides (40) having milled portions (41), which protrude from each skid (37) and which are coupled laterally in complementary seats (39) situated in said cavity (36) of the second lower half-coupling (33) which is spherically-shaped.

## Patentansprüche

1. Multifunktionale, neigbare Lenksäule, umfassend ein erstes bewegliches Teil des Gehäuses (16) und ein zweites darunterliegendes festes Teil (19) des Gehäuses, ein Stangenelement (13), einstückig mit einem Griff, das in der Mitte eines Lenkrades eines Fahrzeugs positioniert ist und in dem ersten Teil des beweglichen Gehäuses (16) gelegen ist, und einen Schaft (31), der mit einem hydraulischen Servolenksystem verbunden ist und innerhalb des zweiten darunterliegenden festen Teils (19) des Gehäuses positioniert ist, eine Kupplung (30), die zur Übertragung der Drehbewegung zwischen dem Stangenelement (13) und dem Schaft (31) und für die regulierte geneigte Positionierung zwischen dem ersten beweglichen Teil (16) des Gehäuses und dem zweiten darunterliegenden festen Teil (19) des Gehäuses zwischengeschaltet ist, wobei das Stangenelement (13) in einer Teleskopiergruppe positioniert ist, die ein inneres Rohrelement (14) umfasst, das innen und axial mit Bezug auf ein äußeres Rohrelement (15) gleitet, wobei ein zwangsweise ausdehnbares Kupplungsmittel (20, 21) innerhalb des äußeren Rohrelements (15) positioniert und mit Bezug auf das äußere Rohrelement (15) beweglich ist, welche durch die Rotation des Stangenelements (13) bewegt werden und zum Positionieren desselben sicher in einer Höhenposition mit Bezug auf das erste bewegliche Teil des Gehäuses (16) geeignet sind, **dadurch gekennzeichnet, dass** eine polygonale Kupplung zwischen den zwei Rohrelementen (14, 15) vorgesehen ist, wobei die Kupplung (30) eine erste obere Halbkupplung (32), die mit dem Ende des äußeren Rohrelements (15) gekuppelt ist, und eine zweite untere Halbkupplung (33), die einstückig mit dem Schaft (31) ist, umfasst, die eine vollständige kugel-birnenförmige Kupplung bilden, in welcher die erste obere Halbkupplung (32) mittels eines Abdeckungselements (34) abgedeckt ist, welches sie in einer ihrer Kupplungspositionen mit der zweiten unteren Halbkupplung (33) einhüllt, wobei das Abdeckungselement (34) ein Kautschukdämpfungselement ist, und zwei zylindrische Buchsen (38) auf das Abdeckungselement (34) gepresst sind, an welchen zwei Gleitstücke (37), die in der zweiten unteren Halbkupplung (33) eingesetzt sind, angelenkt sind.

2. Lenksäule nach Anspruch 1, **dadurch gekennzeichnet, dass** die zwangsweise ausdehnbaren Kupplungsmittel ein erstes Sperrelement (20) und ein zweites Sperrelement (21) umfassen, die beide eine Form des Außenumfangs komplementär zu dem inneren Querschnitt des äußeren polygonalen Rohrelements (15) aufweisen.

3. Lenksäule nach Anspruch 2, **dadurch gekennzeichnet, dass** das erste Sperrelement (20) und das zweite Sperrelement (21) an einander gegenüberliegenden Flächen umfassen: das erste Element (20), einen abgeschrägten Anschnitt (25), und das andere Element (21), einen abgeschrägten Abschnitt (26) mit einer komplementären Form, welche als Ausdehnungsebenen der zwei Sperrelemente (20, 21) wirken.

4. Lenksäule nach Anspruch 2 oder 3, **dadurch gekennzeichnet, dass** das zweite Sperrelement (21) frei auf dem Stangenelement (13) gleiten kann, um mit dem ersten Sperrelement (20) und mit dem inneren gleitenden Rohrelement (14) in Kontakt gebracht zu werden.

5. Lenksäule nach Anspruch 3 oder 4, **dadurch gekennzeichnet, dass** eine konische ringförmige axiale Verlängerung (27) an dem zweiten Sperrelement (21) in dem Teil entgegengesetzt zu dem vorgesehen ist, in welchem sich der abgeschrägte Abschnitt (26) befindet, und welche im Inneren eines komplementären Gehäuses (28) in Eingriff steht, das axial mit Bezug auf ein zugewandtes Ende des Rohrelements (14) positioniert ist.

6. Lenksäule nach Anspruch 1, **dadurch gekennzeichnet, dass** das Abdeckungselement (34) wiederum durch einen reibungsarmen Mantel (35) bedeckt ist, dessen Außenseite in einer gleitenden kugelförmigen Kupplung mit einem Hohlraum (36) der zweiten unteren Halbkupplung (33) gekuppelt ist.

7. Lenksäule nach Anspruch 1, **dadurch gekennzeichnet, dass** die Gleitstücke (37) geformte gegenüberliegende Seiten (40) aufweisen, die gefräste Abschnitte (41) besitzen, die von jedem Gleitstück (37) vorstehen und die seitlich in komplementären Sitzen (39) gekuppelt sind, die in dem Hohlraum (36) der zweiten unteren Halbkupplung (33), der kugelförmig ist, gelegen sind.

## Revendications

1. Colonne de direction inclinable multifonctions, comportant une première partie mobile (16) du châssis et une seconde partie inférieure fixe (19) du châssis, un élément formant tige (13), qui fait corps avec un volant, placée au centre d'un volant de direction d'un véhicule et située dans ladite première partie du châssis mobile (16), et un arbre (31) accouplé avec un système de direction hydraulique, placé à l'intérieur de ladite seconde partie inférieure fixe (19) du châssis, un accouplement (30) étant intercalé pour la transmission du mouvement de rotation entre ledit élément formant tige (13) et ledit arbre (31) et pour la mise en position inclinée réglée entre ladite première partie mobile (16) du châssis et ladite seconde partie inférieure fixe (19) du châssis, ledit élément formant tige (13) étant placé dans un groupe télescopique comprenant un élément tubulaire interne (14) qui coulisse intérieurement et axialement par rapport par rapport à un élément tubulaire externe (15), des moyens d'accouplement forcé déployables (20, 21) étant placés à l'intérieur dudit élément tubulaire externe (15) et mobiles par rapport audit élément tubulaire externe (15), lesquels sont animés par la rotation dudit élément formant tige (13) et permettent de le placer fermement dans une position en hauteur par rapport à ladite première partie mobile (16) du châssis, **caractérisée en ce qu'**un accouplement polygonal est prévu entre lesdits deux éléments tubulaires (14, 15), ledit accouplement (30) comprenant un premier demi-accouplement supérieur (32) accouplé avec l'extrémité dudit élément tubulaire externe (15) et un second demi-accouplement inférieur (33) faisant corps avec l'arbre (31), lesquels forment un accouplement complet en forme d'ampoule sphérique dans lequel ledit premier demi-accouplement supérieur (32) est gainé à l'aide d'un élément de gainage (34) qui l'enveloppe dans l'une de ses portions d'accouplement avec le second demi-accouplement inférieur (33), ledit élément de gainage (34) étant un élément d'amortissement en caoutchouc et deux manchons cylindriques (38) étant étroitement ajustés sur ledit élément de gainage (34), sur lesquels sont articulées deux cales (37) insérées dans ledit second demi-accouplement inférieur (33).

2. Colonne de direction selon la revendication 1, **caractérisé en ce que** lesdits moyens d'accouplement forcé déployables comprennent un premier élément de blocage (20) et un second élément de blocage (21), tous deux ayant un pourtour extérieur d'une forme complémentaire de la section intérieure de l'élément tubulaire externe polygonal (15).

3. Colonne de direction selon la revendication 2, **caractérisée en ce que** ledit premier élément de blocage (20) et ledit second élément de blocage (21) comprennent, sur des surfaces en regard l'une de l'autre : le premier élément (20), une portion biseautée (25) et l'autre élément (21), une portion biseautée (26) d'une forme complémentaire, qui servent de plans de déploiement des deux éléments de blocage (20,21).

4. Colonne de direction selon la revendication 2 ou 3, **caractérisée en ce que** ledit second élément de blocage (21) peut coulisser librement sur l'élément formant tige (13) de manière à être mis au contact dudit premier élément de blocage (20) et dudit élément tubulaire interne coulissant (14).

5. Colonne de direction selon la revendication 3 ou 4, **caractérisée en ce qu'**un prolongement axial annulaire conique (27) est prévu sur ledit second élément de blocage (21), dans la partie opposée à celle dans laquelle se trouve ladite portion biseautée (26), et qui est engagée à l'intérieur d'un logement complémentaire (28) disposé axialement par rapport à une extrémité dudit élément tubulaire (14) située en regard.

6. Colonne de direction selon la revendication 1, **caractérisée en ce que** ledit élément de gainage (34) est lui-même couvert par une enveloppe antifriction (35) dont l'extérieur est accouplé, dans un accouplement coulissant sphérique, avec une cavité (36) du second demi-accouplement inférieur (33).

7. Colonne de direction selon la revendication 1, **caractérisée en ce que** lesdites cales (37) ont des faces opposées profilées (40) ayant des portions fraisées (41) qui dépassent de chaque cale (37) et qui sont montées latéralement dans des sièges complémentaires (39) situés dans ladite cavité (36) du second demi-accouplement inférieur (33) de forme sphérique.
